# EUROPEAN PATENT SPECIFICATION

(11) **EP 1 892 224 B1**
(45) Date of publication and mention of the grant of the patent: **09.03.2011**
(21) Application number: 06017377.0
(22) Date of filing: 21.08.2006
(51) Int. Cl.: C03C 17/34, G02F 1/1335, G02F 1/1343

(54) **Method of hiding transparent electrodes on a transparent substrate**
Verfahren zum Verstecken von transparenten Elektroden auf einem transparenten Substrat
Procédé pour cacher des électrodes transparentes sur un substrat transparent

(43) Date of publication of application: 27.02.2008
(60) Divisional application: 09006644.0
(73) Proprietor: TPK Touch Solutions Inc., Taipei City (TW)
(72) Inventor: Hu, Chun-Min, Keelung (TW)
(74) Representative: Karakatsanis, Georgios

(56) References cited:
- EP-A- 1 498 259
- US-B1- 6 439 943

## Description

### FIELD OF THE INVENTION

The present invention relates to a method of hiding transparent electrodes on a transparent substrate, and more particularly to a method that coats a solution of non-conductive nanoparticles onto a transparent substrate to prevent a different refractive index of light at any position of the transparent substrate that will cause a poor image quality of the screen.

### BACKGROUND OF THE INVENTION

In recent years, technology advancement reflected to various different products, particularly the electronic, information, and communication products. These products not only come with innovative designs, structures and functions, but also meet the requirements for user-friendly application and input method as well as providing diversified features. The development of a touch panel has changed the input mode of the traditional electronic products, so that users are no longer restricted by a traditional input device (such as a press key or a mouse for inputting data or operating instructions). A user may use the user-friendly input interface of a touch panel and follows the functional icon on a screen to select the desired function. The selection can be performed either by using a finger or a touch pen to execute a task without going through special training and learning. Currently, touch panels are used extensively in different personal electronic products such as a palm-sized PC, a personal digital assistant (PDA), and an information appliance. These products are used in public information stations for the medical treatment, traffic, travel and education related areas, such that the scope of applicability and the market requirements of the touch panels tend to be expanded continuously.

The EP 1 498 259 A1 discloses a laminate comprising at least a transparent substrate, a transparent conductive thin-film layer containing silver and a protective layer containing a binder material and inorganic fine particles, wherein the transparent conductive thin-film layer is in contact with the protective layer. The transparent conductive thin-film layer containing silver comprises at least a transparent high-refractive index thin-film layer and a transparent metal thin - film layer.

The US patent 6,439,943 B1 discloses a manufacturing method of a plasma display panel, the panel comprising a front panel including a front glass substrate on which a first electrode and a first dielectric glass layer have been formed and a back panel including a back glass substrate on which a second electrode and a phosphor layer have been formed. According to the US 6,439,943 B1 the front and the back panel are positioned in a way that the first and second electrodes face each other in a predetermined distance, walls being formed between the front and back panels and spaces surrounded by the front panel, whereby the back panel and the walls are filled with a dischargeable gas. The first dielectric glass layer is formed by firing a glass powder with an average particle diameter of 0.1 to 1.5 □m and a maximum particle diameter that is no greater than three times the average particle diameter.

In general, a touch panel produced by installing an ITO film onto a transparent glass substrate to form an ITO glass that generally operates together with a flat cable and a circuit board, and a control IC installed on the circuit board executes a control instruction according to the corresponding position pressed by a user, so as to achieve the purpose of inputting data and instruction through the touch panel. Since these touch panels are commonly installed for various different electronic products as a liquid crystal display (LCD), therefore users can press the touch panel to input data and instruction without requiring to Install traditional input devices (including a keyboard and a mouse) in order to save more working space or install a larger display panel to facilitate users to browse or input data.

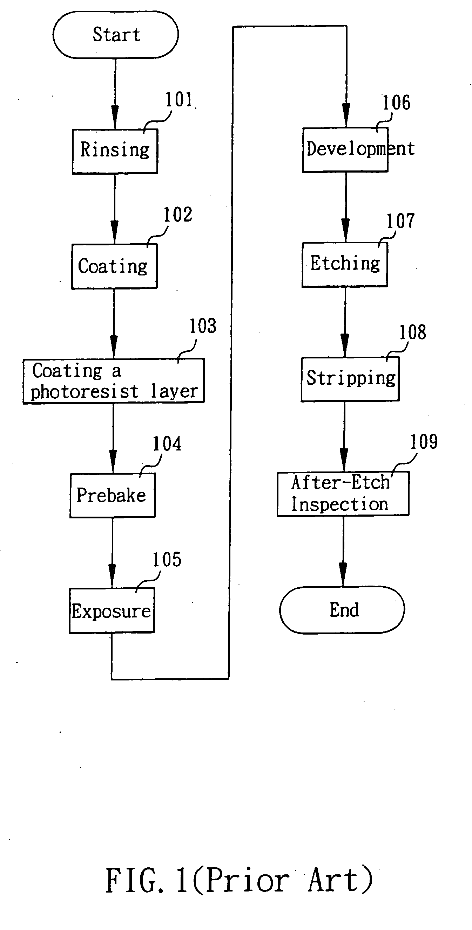

In view of the description above, the ITO glass is a major component of the touch panel, and the ITO glass comprises a transparent glass substrate and a transparent conducting layer. In the fabrication of an ITO glass, an electrically insulating transparent glass substrate is coated with a layer of transparent conducting metal material, and the transparent conducting layer is formed on the transparent glass substrate. In general, the transparent conducting layer is made of indium tin oxide (ITO) and the transparent conducting layer is comprised of a plurality of ITO transparent electrodes disposed in the transparent glass substrate. Referring to FIG. 1 for a detailed description of the structure of the ITO glass, the manufacturing process of the ITO glass is described as follows:
(101) Rinsing: Before the transparent glass substrate is manufactured, it is necessary to rinse the surface of the transparent glass substrate to remove any dust and particle attached on the transparent glass substrate.
(Step 102) Coating: An indium tin oxide film is coated onto a lateral surface of the transparent glass substrate;
(Step 103) Coating a photoresist (P/R) layer: A layer of photoresist material is coated onto the transparent glass substrate having the indium tin oxide film by roller printing.
(Step 104) Prebake: The transparent glass substrate is heated slowly to coat and fix the photoresist layer onto the transparent glass substrate and prepare for the following processes.
(Step 105) Exposure: A fixed amount of ultraviolet (UV) light is projected onto the photoresist layer of the transparent glass substrate for a chemical reaction with the photoresist layer to form a masked pattern area and an exposed area on the photoresist layer.
(Step 106) Development: The exposed area is cleaned by a developer to wash away the photoresist layer in the exposed area in order to expose the indium tin oxide film.
(Step 107) Etching: The indium tin oxide film exposed from the exposed area is rinsed by royal water.
(Step 108) Stripping: An alkaline solution, preferably sodium hydroxide (KOH), is used for rinsing the masked pattern area to dissolve the photoresist layer on the masked pattern area, so that the required ITO transparent electrodes can be formed on the transparent glass substrate.
(Step 109) After-etch Inspection: The electrodes of the transparent glass substrate are inspected. If there is any short circuit found between the ITO electrodes, then the point of short circuit will be removed by a laser correction machine, so as to complete the fabrication of the ITO glass and prepare for the later process to install the transparent glass substrate into the touch panel.

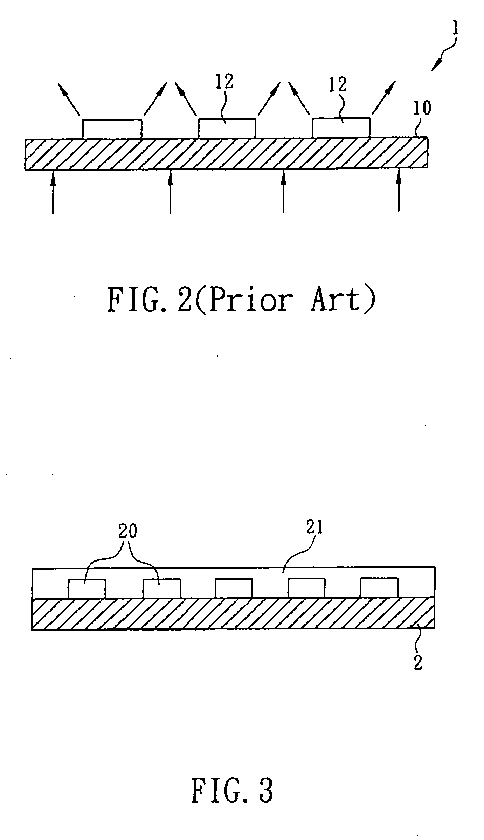

When the ITO glass is used as an LCD display, users often observe a discontinuous layer, a blurred image, a particle formation or a reduced resolution of the display screen through the ITO glass, since the refractive index of the light at each position of the ITO glass is different. Referring to FIG. 2 for the ITO glass 1 produced by the foregoing process, the ITO glass 1 comprises a transparent glass substrate 10 and a plurality of ITO transparent electrodes 12 disposed on the transparent glass substrate. The refractive index of light at the positions of the transparent glass substrate 10 without the ITO transparent electrodes 12 ranges between 1.4 and 1.5, and the refractive index of light of the ITO transparent electrodes 12 ranges from 1.8 to 2.2. Since the refractive indexes of the two are different, the image quality of the screen observed by users will be lowered greatly, and the images of smaller graphics and texts will become blurred, and thus users may not be able to successfully press the correct buttons on the screen to execute a control instruction corresponding to the button position, and thus users cannot input their desired data or instruction successfully.

### SUMMARY OF THE INVENTION

In view of the shortcomings of the prior art, the inventor of the present invention designed and developed a method of hiding transparent electrodes on a transparent substrate in accordance with the present invention.

Therefore, it is a primary objective of the present invention to provide a method of hiding transparent electrodes on a transparent substrate, and the method coats a solution of non-conductive nanoparticles onto the transparent substrate and the transparent electrodes after forming a plurality of transparent electrodes on the transparent substrate, and the refractive indexes of light for both non-conductive nanoparticles and the transparent electrodes are the same. After a high-temperature thermal processing is performed to the transparent substrate for a thermal processing time, an even mask is formed on the transparent substrate and the transparent electrodes, such that the non-conductive nanoparticles in the mask provide the same refractive index of light for the positions of the transparent substrate with and without the transparent electrodes, so as to effectively prevent a different refractive index of light at any position of the transparent substrate that will cause a poor image quality of the screen.

The above and other objects, features and advantages of the present invention will become apparent from the following detailed description taken with the accompanying drawings.

### BRIEF DESCRIPTION OF THE DRAWINGS

FIG 1 is a flow chart of fabricating a prior art ITO glass;
FIG 2 is a schematic view of a prior art ITO glass;
FIG. 3 is a schematic view of a transparent substrate of the invention;
FIG. 4 is a flow chart of fabricating a transparent substrate and a mask of the invention;
FIG. 5 is a flow chart of a preferred embodiment of the invention; and
FIG. 6 is a flow chart of another preferred embodiment of the invention.

### DETAILED DESCRIPTION OF THE PREFERRED EMBODIMENTS

Referring to FIG. 3 for a method of hiding transparent electrodes on a transparent substrate in accordance with the present invention, the method forms a plurality of transparent electrodes 20 on a transparent substrate 2, and then coats a solution of non-conductive nanoparticles onto the transparent substrate 2 and the transparent electrodes 20. The refractive indexes of light for both non-conductive nanoparticles and transparent electrodes 20 are the same, so that the transparent substrate 2 is processed by a high-temperature thermal processing for a thermal processing time, and a flat and even mask 21 is formed on the transparent substrate 2 and the transparent electrodes 20. With the non-conductive nanoparticles in the mask 21, the refractive indexes of light at the positions of the transparent substrate 2 with and without the transparent electrodes 20 are the same, so as to effectively prevent a different refractive index of light at any position of the transparent substrate 2 that will cause a poor image quality on the screen.

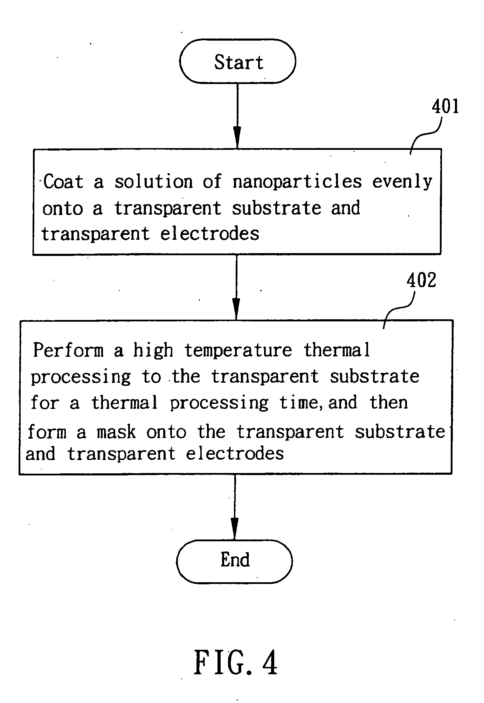

Referring to FIG. 4 for the method used for processing a transparent substrate having a plurality of transparent electrodes 20 according to the present invention, the method comprises the steps of:
(Step 401) forming a solution of non-conductive nanoparticles having a refractive index of light equal to that of the transparent electrode 20, and evenly coating the solution onto the transparent substrate 2 and the transparent electrodes 20; and
(Step 402) forming a flat and even mask 21 on the transparent substrate 2 and the transparent electrodes 20, after performing a high-temperature thermal processing to the transparent substrate 2 for a thermal processing time.

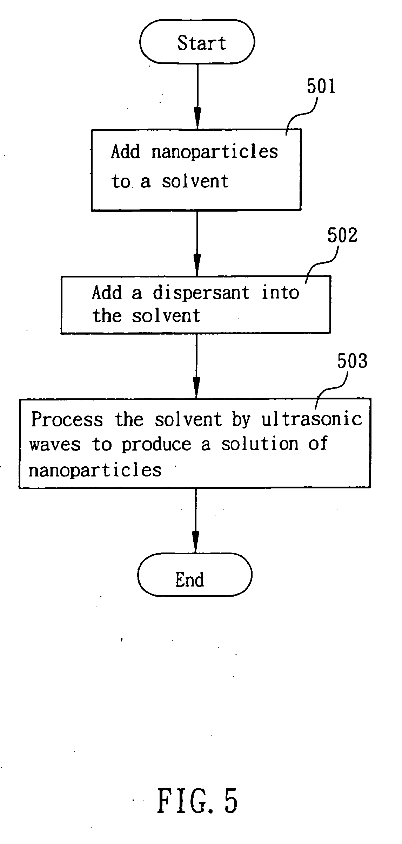

Referring to FIG. 5 for a preferred embodiment of the present invention, the method carries out the following process before forming a solution of non-conductive nanoparticles and coating the solution onto the transparent substrate 2 and the transparent electrodes 20, and such process comprises the steps of:
(Step 501) adding a solvent to the non-conductive nanoparticles;
(Step 502) adding a dispersant into the solvent; and
(Step 503) processing the solvent by ultrasonic waves, so that the non-conductive nanoparticles are evenly dispersed in the solvent to produce the solution, and the non-conductive nanoparticle can be coated evenly onto the transparent substrate 2 and the transparent electrodes 20.

In FIG. 3, the refractive index of light for the non-conductive nanoparticles ranges from 1.8 to 2.2, and the non-conductive nanoparticles could be made of antimony (II) trioxide (Sb₂O₃), chromium (II) trioxide (Cr₂O₃), indium (II) trioxide (In₂O₃), tantalum (II) trioxide (Ta₂O₃), titanium dioxide (TiO₂) or zirconium oxide (ZrO₂) or their mixture, and the size of the nanoparticles ranges from 10nm to 100nm, such that when the nanoparticles are evenly coated onto the transparent substrate 2 and the transparent electrodes 20 to form a flat and even mask 21, the nanoparticles maintain the refractive index of light at the positions of the transparent substrate 2 with and without the transparent electrodes 20 in the range from 1.8 to 2.2 to effectively overcome the shortcomings of the ITO glass that causes a blurred image, a particle formation and a reduced resolution due to the different refractive indexes of light at different positions of the ITO glass.

In this preferred embodiment, the solvent is processed by ultrasonic waves and an adhesive is added into the solvent, before the dispersant is added to the solvent. The adhesive could be a siloxane compound, and the solvent could be ethanol, so that the solution of nanoparticles can be produced after processing by ultrasonic waves. After the solution of nanoparticles is coated onto the transparent substrate 2 and the transparent electrodes, the transparent substrate 2 is processed for at least 30 minutes, and the temperature of the high-temperature thermal processing is maintained in a range from 100°C to 200°C to evenly form a flat and even mask 21 onto the transparent substrate 2 and the transparent electrodes 20, so that the nanoparticles can be attached evenly onto the transparent substrate 2 and the transparent electrodes 20.

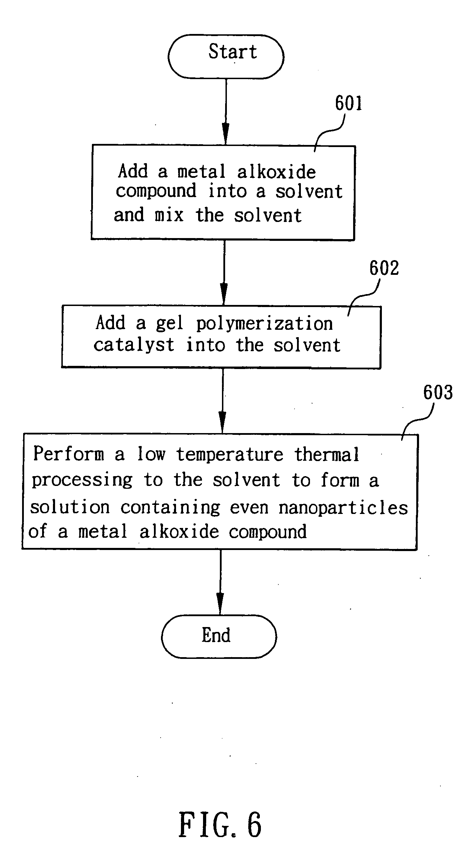

Referring to FIG. 6 for another preferred embodiment of the present invention, the method of producing the solution of non-conductive nanoparticles comprises the steps of:
(Step 601) adding a metal alkoxide compound into a solvent and mixing the solvent;
(Step 602) adding a gel polymerization catalyst into the solvent; and
(Step 603) performing a low-temperature thermal processing to the solvent at a temperature ranging from 50°C to 80°C for a reaction time required for a so-gel process, so as to form a solution containing even nanoparticles of a metal alkoxide compound.

In FIG. 3, the nanoparticles of the metal alkoxide compound have a refractive index of light ranging from 1.8 to 2.2 and the metal alkoxide compound could be titanium (IV) butoxide (Ti(OCH₂CH₂CH₂CH₃)₄), so that when the nanoparticles of the metal alkoxide compound are evenly coated onto the transparent substrate 2 and the transparent electrodes 20 to form a flat and even mask 21, the nanoparticles of the metal alkoxide compound can maintain the refractive index of light at the positions of the transparent substrate 2 with and without the transparent electrodes 20 within the range from 1.8 to 2.2, so as to effectively overcome the shortcomings of the traditional ITO glass having a blurred image, a color difference, a particle formation, or a reduced resolution due to the different refractive indexes of light at different positions of the ITO glass.

In another preferred embodiment, the solvent could be acetylacetone, and the gel polymerization catalyst could be nitric acid and water. After the solvent has gone through a so-gel process for at least 60 minutes, the solution of nanoparticles of the metal alkoxide compound is produced, and the solution is coated onto the transparent substrate 2 and the transparent electrodes 20. After the transparent substrate 2 has gone through the high-temperature thermal processing process for at a temperature ranging from 200°C to 300°C for at least 60 minutes to form a flat and even mask 21 onto the transparent substrate 2 and the transparent electrodes 20, such that the nanoparticles of the metal alkoxide compound can be attached evenly onto the transparent substrate 2 and the transparent electrodes 20.

The method of the present invention not only can eliminate the etching lines formed between the transparent substrate 2 and the transparent electrodes 20 that may result adverse effects, but also can effectively overcome the poor image quality of the screen caused by different refractive indexes of light at the positions of the transparent substrate 2 with and without the transparent electrodes 20.

## Claims

1. A method of hiding transparent electrodes on a transparent substrate, which is applied on a transparent substrate for installing a plurality of transparent electrodes thereon, comprising the following steps:
coating a solution of non-conductive nanoparticles onto said transparent substrate and said transparent electrodes; and
forming a flat and even mask onto said transparent substrate and said transparent electrodes, after performing a high-temperature thermal processing to said transparent substrate for a thermal processing time
**characterized in that** the non-conductive nanoparticles have a refractive index equal to the refractive index of said transparent electrodes.

2. The method of claim 1, further comprising a process performed before said solution is coated onto said transparent substrate and said transparent electrode, and said process comprises the steps of:
adding a solvent to said non-conductive nanoparticles;
adding a dispersant into said solvent; and
evenly dispersing said non-conductive nanoparticles in said solvent to produce said solution by using ultrasonic waves.

3. The method of claim 2, further comprising a step of adding an adhesive into said solvent, after said dispersant is added to said solvent and before said solvent is processed by ultrasonic waves.

4. The method of claim 3, wherein said non-conductive nanoparticle has a refractive index ranging from 1.8 to 2.2 and could be made of antimony (II) trioxide (Sb₂O₃), chromium (II) trioxide (Cr₂O₃), Indium (II) trioxide (In₂O₃), tantalum (II) trioxide (Ta₂O₃), titanium dioxide (TiO₂), or zirconium oxide (ZrO₂) or a mixture of the above.

5. The method of claim 4, wherein said adhesive is a siloxane compound.

6. The method of claim 5, wherein said solvent is an ethanol solution.

7. The method of claim 6, wherein said non-conductive nanoparticle has a size ranging from 0nm to 100nm.

8. The method of claim 7, wherein said high-temperature thermal processing is performed at a temperature ranging from 100°C to 200°C.

9. The method of claim 1, further comprising a process performed before coating said solution, and said process comprises the steps of:
adding a metal alkoxide compound into a solvent and mixing said solvent;
adding a gel polymerization catalyst into said solvent;
performing a low-temperature thermal processing to said solvent for a reaction time to produce said solution having said non-conductive nanoparticles.

10. The method of claim 9, wherein said metal alkoxide compound is titanium (IV) butoxide (Ti(OCH₂CH₂CH₂CH₃)₄).

11. The method of claim 10, wherein said solvent is an acetylacetone solvent.

12. The method of claim 11, wherein said gel polymerization catalyst is comprised of nitric acid and water.

13. The method of claim 12, wherein said high-temperature thermal processing is performed at a temperature ranging from 200°C to 300°C.

14. The method of claim 13, wherein said low-temperature thermal processing is performed at a temperature ranging from 50°C to 80°C.

## Patentansprüche

1. Verfahren zum Verstecken transparenter Elektroden auf einem transparenten Substrat in der Anwendung auf ein transparentes Substrat zur Aufnahme einer Vielzahl transparenter Elektroden, wobei das Verfahren folgende Schritte aufweist:
Auftragen einer Lösung nicht leitfähiger Nanopartikel auf das transparente Substrat und die transparenten Elektroden; und
Ausbilden einer flachen und gleichmäßigen Maske auf dem transparenten Substrat und den transparenten Elektroden nach einer Hochtemperatur-Wärmebehandlung des transparenten Substrats für eine bestimmte Behandlungsdauer;
**dadurch gekennzeichnet, dass** die nicht leitfähigen Nanopartikel einen Brechungsindex gleich dem der transparenten Elektroden aufweisen.

2. Verfahren nach Anspruch 1, bei dem vor dem Auftragen der Lösung auf das transparente Substrat und die transparente Elektrode ein Prozess mit folgenden Schritten durchgeführt wird:
Zugeben eines Lösungsmittels zu den nicht leitfähigen Nanopartikeln;
Zugeben eines Dispergators zum Lösungsmittel; und
gleichmäßiges Verteilen der nicht leitfähige Nanopartikel im Lösungsmittel mittels Ultraschallwellen, um die Lösung herzustellen.

3. Verfahren nach Anspruch 2 weiterhin mit dem Schritt einer Zugabe eines Klebstoffs zum Lösungsmittel nach der Zugabe des Dispergatorszum Lösungsmittel und vor der Ultraschallbehandlung des letzteren.

4. Verfahren nach Anspruch 3, bei dem die nicht leitfähigen Nanopartikel einen Brechungsindex im Bereich von 1,8 bis 2,2 aufweisen und aus Antimon(II)-trioxid (Sb₂O₃), Chrom(II)-trioxid (Cr₂O₃), Indium(II)-trioxid (In₂O₃), Tantal(II)-trioxid (Ta₂O₃), Titandioxid (TiO₂), Zirconoxid (ZrO₂) oder Mischungen derselben hergestellt sein kann.

5. Verfahren nach Anspruch 4, bei dem der Klebstoff eine Siloxan-Verbindung ist.

6. Verfahren nach Anspruch 5, bei dem das Lösungsmittel eine Ethanol-Lösung ist.

7. Verfahren nach Anspruch 6, bei dem das nicht leitfähige Nanopartikel eine Größe im Bereich von 0 nm bis 100 nm hat.

8. Verfahren nach Anspruch 7, bei dem die Hochtemperatur-Wärmebehandlung in einem Temperaturbereich von 100°C bis 200 °C erfolgt.

9. Verfahren nach Anspruch 1, bei dem weiterhin vor dem Auftragen der Lösung ein Prozess mit folgenden Schritten durchgeführt wird:
Einmischen einer Metallalkoxid-Verbindung in das Lösungsmittel;
Zugabe eines Gelpolymerisierungs-Katalysators in das Lösungsmittel;
Durchführen einer Niedertemperatur-Wärmebehandlung auf das Lösungsmittel für eine Reaktionsdauer, bei der sich die Lösung mit den nicht leitfähigen Nanopartikein ergibt.

10. Verfahren nach Anspruch 9, bei dem die Metallalkoxid-Verbindung Titan(IV)-butoxid (Ti(OCH₂CH₂CH₂CH₃)₄) ist.

11. Verfahren nach Anspruch 10, bei dem das Lösungsmittel ein Acetylaceton-Lösungsmittel ist.

12. Verfahren nach Anspruch 11, bei dem der Gelpolymerisierungs-Katalysator aus Salpetersäure und Wasser besteht.

13. Verfahren nach Anspruch 12, bei dem die Hochtemperatur-Wärmebehandlung in einem Temperaturbereich von 200 °C bis 300 °C erfolgt.

14. Verfahren nach Anspruch 13, bei dem die Niedertemperatur-Wärmebehandiung in einem Temperaturbereich von 50 °C bis 80 °C erfolgt.

## Revendications

1. Une méthode de dissimulation d'électrodes transparentes sur un substrat transparent, qui est appliquée sur un substrat transparent pour y installer un ensemble d'électrodes transparentes, comprenant les étapes suivantes :
revêtement par une solution de nanoparticules non conductrices sur ledit substrat transparent et lesdites électrodes transparentes ; et
formation d'un masque plat et uniforme sur ledit substrat transparent et lesdites électrodes transparentes, après avoir effectué un traitement thermique haute température sur ce substrat transparent pendant une durée de traitement thermique,
**caractérisée en ce que** les nanoparticules non conductrices ont un indice de réfraction égal à l'indice de réfraction desdites électrodes transparentes.

2. La méthode de la revendication 1, comprenant de plus un traitement effectué avant que ladite solution soit appliquée sur ledit substrat transparent et ladite électrode transparente, et ledit traitement comprend les étapes de :
ajout d'un solvant à ces nanoparticules non conductrices ;
ajout d'un dispersant à ce solvant ; et
la dispersion uniforme desdites nanoparticules non conductrices dans ledit solvant pour produire ladite solution à l'aide d'ultrasons.

3. La méthode de la revendication 2, comprenant de plus une étape d'ajout d'un adhésif dans ledit solvant, après que ledit dispersant ait été ajouté à ce solvant et avant que ce solvant n'ait été traité par ultrasons.

4. La méthode de la revendication 3, où ladite nanoparticule non conductrice a un indice de réfraction allant de 1,8 à 2,2 et pourrait être faite de trioxyde d'antimoine (II) (Sb₂O₃), de trioxyde de chrome (II) (Cr₂O₃), de trioxyde d'indium (II) (In₂O₃), de trioxyde de tantale (II) (Ta₂O₃), de dioxyde de titane (TiO₂), ou d'oxyde de zirconium (ZrO₂) ou d'un mélange des éléments ci-dessus.

5. La méthode de la revendication 4, où ledit adhésif est un composé de siloxane.

6. La méthode de la revendication 5, où ledit solvant est une solution d'éthanol.

7. La méthode de la revendication 6, où ladite nanoparticule non conductrice a une taille allant de 0 nm à 100 nm.

8. La méthode de la revendication 7, où ledit traitement thermique haute température est effectué à une température allant de 100°C à 200°C.

9. La méthode de la revendication 1, comprenant de plus un traitement effectué avant le revêtement avec ladite solution, et ledit traitement comprend les étapes de :
ajout d'un composé d'alkoxyde de métal à un solvant et mélange dudit solvant ;
ajout d'un catalyseur de polymérisation du gel à ce solvant ;
réalisation d'un traitement thermique basse température dudit solvant pendant un temps de réaction pour que se produise ladite solution avec lesdites nanoparticules non conductrices.

10. La méthode de la revendication 9. où ledit composé d'alkoxyde de métal est du butoxyde de titane (IV) (Ti(OCH₂CH₂CH₂CH₃)₄).

11. La méthode de la revendication 10, où ledit solvant est un solvant d'acétylacétone.

12. La méthode de la revendication 11, où ledit catalyseur de polymérisation du gel se compose d'acide nitrique et d'eau.

13. La méthode de la revendication 12, où ledit traitement thermique haute température est effectué à une température allant de 200°C à 300°C.

14. La méthode de la revendication 13, où ledit traitement thermique basse température est effectué à une température allant de 50°C à 80°C.
